# EUROPEAN PATENT APPLICATION

(11) **EP 4 629 202 A1**
(43) Date of publication of application: **08.10.2025**
(21) Application number: 24215765.9
(22) Date of filing: 27.11.2024
(51) Int. Cl.: G07C 5/08

(54) **VEHICLE CONTROL DEVICE AND METHOD**

(30) Priority: 02.04.2024 KR 20240044850
(71) Applicant: Hyundai Motor Company, Seoul 06797 (KR); Kia Corporation, Seocho-gu Seoul 06797 (KR); Hyundai AutoEver Corp., Gangnam-gu Seoul 06179 (KR)
(72) Inventor: HAN, Jang Soon, 18280 Hwaseong-si, Gyeonggi-do (KR); YU, Seok Ho, 16014 Uiwang-si, Gyeonggi-do (KR)
(74) Representative: Viering, Jentschura & Partner mbB Patent- und Rechtsanwälte

(57) **Abstract**

A vehicle control device may delete at least a portion of driving data stored in the memory using the reference data when a trigger signal is identified, acquire real-time driving data of a host vehicle using the sensor device, identify a characteristic of the real-time driving data using the reference data, filter the real-time driving data based on the identified characteristic, and store the filtered real-time driving data in a directory included in the memory, the directory corresponding to the characteristic.

## Description

### CROSS-REFERENCE TO RELATED APPLICATION

The present application claims priority to Korean Patent Application No. 10-2024-0044850, filed in the Korean Intellectual Property Office on April 2, 2024, the entire contents of which are incorporated herein by reference for all purposes.

### TECHNICAL FIELD

The present disclosure relates to a vehicle control device and method.

### BACKGROUND

With the development of vehicle control technology, the need for algorithms and systems that store and manage various pieces of information about vehicles in real time is increasing.

For example, if a vehicle performs autonomous driving, a storage and management system (e.g., Data Storage System for Automated Driving: DSSAD) that selectively stores and manages various driving data generated during the vehicle's driving may be applied.

Various conditions regarding data storage may exist in an autonomous driving control situation. For example, in countries adjacent to borders, such as European countries, different storage regulations (e.g. storage period) may be enacted by law, and if a vehicle crosses the border and enters another country, storage regulations/conditions may be changed. In this case, the vehicle control device may need to perform a cumbersome process to identify data storage regulations and delete a portion of data based on the conditions.

### SUMMARY

The following summary presents a simplified summary of certain features. The summary is not an extensive overview and is not intended to identify key or critical elements.

An aspect of the present disclosure provides a vehicle control device and a vehicle control method which delete a portion of driving data previously stored in a memory according to a storage expiration date when a trigger signal is identified, and adaptively filter and store newly-identified real-time driving data to meet storage regulations according to a location of driving of a host vehicle or a location of acquisition of real-time driving data

An aspect of the present disclosure provides a vehicle control device and a vehicle control method which identify a characteristic including a location where real-time driving data is obtained and a type of the data using reference data stored in advance in a memory and store the real-time driving data in a directory corresponding to the identified characteristic.

An aspect of the present disclosure provides a vehicle control device and a vehicle control method which set the file name of a file corresponding to real-time driving data to the time of acquisition and data type of the real-time driving data and store the real-time driving data in a directory.

The technical problems to be solved by the present disclosure are not limited to the aforementioned problems, and any other technical problems not mentioned herein will be clearly understood from the following description by those skilled in the art to which the present disclosure pertains.

An apparatus for controlling autonomous driving of a vehicle may comprise: a sensor device; a memory configured to store at least one instruction and reference data; and a controller operatively coupled to the sensor device and the memory, wherein the at least one instruction is configured to, when executed by the controller, cause the apparatus to: based on a first trigger signal, delete, using the reference data, at least a portion of driving data stored in the memory; acquire, via the sensor device, real-time driving data of the vehicle; identify, using the reference data, a characteristic of the real-time driving data; filter, based on the identified characteristic, the real-time driving data; store the filtered real-time driving data in a directory included in the memory, wherein the directory corresponds to the characteristic, and wherein the stored real-time driving data comprises a time indicator; cause, based on the real-time driving data, autonomous driving of the vehicle; and based on a second trigger signal, the time indicator, and the characteristic, delete, using the reference data, at least a portion of the real-time driving data stored in the directory.

The at least one instruction may be configured to, when executed by the controller, cause the apparatus to delete the at least a portion of the real-time driving data stored in the directory by: comparing a storage expiration date of the real-time driving data included in the reference data with a time of acquisition of the real-time driving data, wherein the storage expiration date is associated with a type of the real-time driving data and an acquisition location of the real-time driving data; and deleting, based on the comparing, the at least a portion of the real-time driving data.

The type of the driving data may comprise: general driving data, wherein the general driving data comprises at least one of autonomous driving control ON/OFF information for the vehicle or information indicating whether a transition demand (TD) condition is satisfied; and emergency driving data, wherein the emergency driving data comprises at least one of emergency situation occurrence information or accident risk detection information.

The at least one instruction may be configured to, when executed by the controller, cause the apparatus to store the filtered real-time driving data in the directory included in the memory by: determining whether the directory corresponding to the characteristic exists in the memory, wherein the characteristic is associated with a location of acquisition of the real-time driving data; generating, based on a determination that the directory does not exist in the memory, the directory; and storing the real-time driving data in the generated directory.

The at least one instruction may be configured to, when executed by the controller, cause the apparatus to set a file name of the filtered real-time driving data to indicate a time of acquisition and a type of the real-time driving data to store the filtered real-time driving data in the directory, wherein the time indicator corresponds to the time of acquisition.

The at least one instruction may be configured to, when executed by the controller, cause the apparatus to: identify, based on the characteristic of the real-time driving data, information about a country in which the real-time driving data is acquired; identify, using the reference data, information to be filtered out according to the information about the country; and assign a null value for the information to be filtered out among pieces of information included in the real-time driving data for storing the real-time driving data in the directory.

The information to be filtered out may comprise at least one of a latitude of a location of acquisition of the real-time driving data or a longitude of the location of acquisition of the real-time driving data.

The at least one instruction may be configured to, when executed by the controller, cause the apparatus to encrypt the filtered real-time driving data before storing the filtered real-time driving data in the directory.

The at least one instruction may be configured to, when executed by the controller, cause the apparatus to: identify, based on a file name of the real-time driving data stored in the directory, a time of acquisition of each piece of the real-time driving data; and based on an available memory of the memory being less than or equal to a threshold, delete, using the time of acquisition, at least an earliest acquired portion of the real-time driving data.

The at least one instruction may be configured to, when executed by the controller, cause the apparatus to determine that the first trigger signal is identified by identifying an IGN ON signal for the vehicle.

A method performed by an apparatus for controlling autonomous driving of a vehicle may comprise: based on a first trigger signal, deleting, by a controller using reference data stored in a memory of the vehicle, at least a portion of driving data stored in the memory; acquiring, by the controller and via a sensor device of the vehicle, real-time driving data of the vehicle; identifying, by the controller using the reference data, a characteristic of the real-time driving data; based on the identified characteristic, filtering, by the controller, the real-time driving data; storing, by the controller, the filtered real-time driving data in a directory included in the memory, wherein the directory corresponds to the characteristic, and wherein the stored real-time driving data comprises a time indicator; causing, based on the real-time driving data, autonomous driving of the vehicle; and based on a second trigger signal, the time indicator, and the characteristic, deleting, using the reference data, at least a portion of the real-time driving data stored in the directory.

The deleting the at least a portion of the real-time driving data stored in the directory may comprise: comparing, by the controller, a storage expiration date of the real-time driving data included in the reference data with a time of acquisition of the real-time driving data, wherein the storage expiration date is associated with a type of the real-time driving data and an acquisition location of the real-time driving data; and based on the comparing, deleting, by the controller, the at least a portion of the real-time driving data.

The type of the driving data may comprise: general driving data, wherein the general driving data comprises at least one of autonomous driving control ON/OFF information for the vehicle or information indicating whether a transition demand (TD) condition is satisfied; and emergency driving data, wherein the emergency driving data comprises at least one of emergency situation occurrence information or accident risk detection information.

The storing the filtered real-time driving data in the directory included in the memory may comprise: determining, by the controller, whether the directory corresponding to the characteristic exists in the memory, wherein the characteristic is associated with a location of acquisition of the real-time driving data; and based on a determination that the directory does not exist in the memory, generating, by the controller, the directory; and storing the real-time driving data in the generated directory.

The method may further comprise: setting a file name of the filtered real-time driving data to indicate a time of acquisition and a type of the real-time driving data to store the filtered real-time driving data, wherein the time indicator corresponds to the time of acquisition.

The method may further comprise: based on the characteristic of the real-time driving data, identifying, by the controller, information about a country in which the real-time driving data is acquired; identifying, by the controller using the reference data, information to be filtered out according to the information about the country; and assigning, by the controller, a null value for the information to be filtered out among pieces of information included in the real-time driving data for storing the real-time driving data in the directory.

The information to be filtered out may comprise at least one of a latitude of a location of acquisition of the real-time driving data or a longitude of the location of acquisition of the real-time driving data.

The method may further comprise: encrypting, by the controller, the filtered real-time driving data before storing the filtered real-time driving data in the directory.

The method may further comprise: based on a file name of the real-time driving data stored in the directory, identifying, by the controller, a time of acquisition of each piece of the real-time driving data; and based on an available memory of the memory being less than or equal to a threshold, deleting, by the controller using the time of acquisition, at least an earliest acquired portion of the real-time driving data.

The method may further comprise: determining that the first trigger signal is identified by identifying an IGN ON signal for the vehicle.

These and other features and advantages are described in greater detail below.

### BRIEF DESCRIPTION OF THE DRAWINGS

The above and other objects, features and advantages of the present disclosure will be more apparent from the following detailed description taken in conjunction with the accompanying drawings:
FIG. 1 shows a block diagram showing components of a vehicle control device according to an example of the present disclosure.
FIG. 2 shows a block diagram showing components of a vehicle control device according to an example of the present disclosure.
FIG. 3 shows a block diagram showing components of a vehicle control device according to an example of the present disclosure.
FIG. 4 shows a flowchart of a vehicle control method according to an example of the present disclosure.
FIG. 5 shows a flowchart of a vehicle control method according to an example of the present disclosure.
FIG. 6 shows a flowchart of a vehicle control method according to an example of the present disclosure.
FIG. 7 shows a computing system related to a vehicle control device or a vehicle control method according to an example of the present disclosure.

In the description of the drawings, the same or similar reference numerals may be used for the same or similar components.

### DETAILED DESCRIPTION

Hereinafter, some examples of the present disclosure will be described in detail with reference to the exemplary drawings. In adding the reference numerals to the components of each drawing, it should be noted that the identical or equivalent component is designated by the identical numeral even if they are displayed on other drawings. Further, in describing the example of the present disclosure, a detailed description of well-known features or functions will be ruled out in order not to unnecessarily obscure the gist of the present disclosure.

In describing the components of the example according to the present disclosure, terms such as first, second, "A", "B", (a), (b), and the like may be used. These terms are merely intended to distinguish one component from another component, and the terms do not limit the nature, sequence or order of the constituent components. Unless otherwise defined, all terms used herein, including technical or scientific terms, have the same meanings as those generally understood by those skilled in the art to which the present disclosure pertains. Such terms as those defined in a generally used dictionary are to be interpreted as having meanings equal to the contextual meanings in the relevant field of art, and are not to be interpreted as having ideal or excessively formal meanings unless clearly defined as having such in the present application.

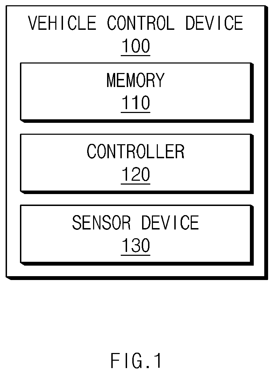

Hereinafter, examples of the present disclosure will be described in detail with reference to FIGS. 1 to 7.

FIG. 1 shows a block diagram showing components of a vehicle control device according to an example of the present disclosure.

According to an example, a vehicle control device 100 may include a memory 110, a controller 120, and a sensor device 130. The configuration of the vehicle control device 100 shown in FIG. 1 is illustrative, and examples of the present disclosure are not limited thereto. For example, the vehicle control device 100 may further include components not shown in FIG. 1 (e.g., at least one of a communication device, an interface device, a display device, or a notification device, or any combination thereof).

According to an example, the memory 110 may store commands or data. For example, the memory 110 may store one or more instructions that, if executed by the controller 120, cause the vehicle control device 100 to perform various operations.

For example, the memory 110 may be implemented on a single chipset with the controller 120. The controller 120 may include at least one of a communications processor or a modem.

For example, the memory 110 may store various information associated with the vehicle control device 100. In one example, the memory 110 may store information about a history of operations of the controller 120. In one example, the memory 110 may store information related to the states and/or operations of components of a host vehicle (e.g., at least one of an engine control unit (ECU), the memory 110, the controller 120, or the sensor device 130, or any combination thereof).

For example, the memory 110 may include a plurality of storage devices of different types. For example, the memory 110 may be a volatile and/or non-volatile memory, such as including at least one of a random access memory (RAM), an embedded multimedia card (eMMC), or a universal flash storage (UFS), or any combination thereof.

For example, the memory 110 may include a plurality of directories that are separated by the location (or, country) of acquisition.

For example, the memory 110 may store reference data.

In one example, the reference data may include information about the location (or, country) of acquisition, based on a country code. For example, if the country code included in the real-time driving data is 250, the vehicle control device 100 may determine that the real-time driving data is driving data acquired in France by using the reference data.

As an example, the reference data may include information regarding a storage expiration date based on the country code and the type of data. For example, if the country code included in the real-time driving data is 276 and the real-time driving data is general driving data, the vehicle control device 100 may identify, by using the reference data, that the real-time driving data is driving data acquired in Germany and a storage expiration date is six months. For example, if the country code included in the real-time driving data is 276 and the real-time driving data is emergency driving data, the vehicle control device 100 may identify, by using the reference data, that the real-time driving data is driving data acquired in Germany and a storage expiration date is 36 months.

In one example, the reference data may include information about a manner of storing data based on a country code. For example, information to be filtered (e.g., latitude and/or longitude) for real-time driving data with a country code of 250 may be defined in the reference data. For example, if the country code included in the real-time driving data is 250, the vehicle control device 100 may determine, using the reference data, that the real-time driving data is driving data acquired in France, and may null the information to be filtered (e.g., latitude and/or longitude) included in the real-time driving data and store the real-time driving data in a relevant directory. In this way, the vehicle control device 100 may efficiently null information (e.g., latitude and/or longitude) of the real-time driving information, which is required not to be stored to protect privacy in a certain country.

In one example, the reference data may include at least one parameter which may be changed, for example, by operation of a user or a developer. For example, the reference data may include country-specific and/or region-specific constraint information (or legal restrictions based on legislation) on driving.

The numerical limitation of country codes and data storage expiration dates described above is illustrative, and examples of the present disclosure are not limited thereto. For example, the information included in the reference data, such as the country code, storage expiration date, and/or storage code, may be set values, which may be changed by settings of a user and/or a developer.

According to an example, the controller 120 may be operatively connected to the memory 110 and/or the sensor device 130. For example, the controller 120 may control the operation of the memory 110 and/or the sensor device 130.

For example, if identifying a trigger signal, the controller 120 may delete at least a portion of the driving data stored in the memory 110 using the reference data.

In one example, the trigger signal may include an IGN ON signal of the host vehicle.

In one example, the trigger signal may include a power-on signal from the vehicle control device 100 and/or an autonomous driving controller for autonomous driving control of the host vehicle.

In one example, the trigger signal may include an ACC signal.

In one example, the controller 120 may compare a storage expiration date based on the type of driving data included in the reference data and the location of acquisition with the time of acquisition of the driving data stored in the memory 110. The controller 120 may identify at least a portion of the driving data stored in the memory 110 that is past its storage expiration date, based on the country code (or, country information) and the time of acquisition of each of pieces of driving data stored in the memory 110, and delete the identified at least a portion. For example, if identifying at least a portion of the driving data stored in the memory 110 that has a country code of 250 and a time of acquisition of more than 40 months ago, the vehicle control device 100 may determine that the at least a portion of the driving data is eligible for deletion by referring to the reference data. The controller 120 may identify at least a portion of the driving data of which storage expiration date is past, based, for example, on the region code (or, region information) and times of acquisition of the pieces of driving data, and may delete the identified at least a portion.

In one example, the type of driving data may include general driving data and/or emergency driving data.

The general driving data may include, for example, information regarding at least one of autonomous driving control ON/OFF information for the host vehicle, or whether a transition demand (TD) condition is satisfied, or any combination thereof. In other words, the general driving data may include data generated during a general and typical driving of the host vehicle, relative to the emergency driving data.

The emergency driving data may include information regarding at least one of, for example, an emergency event occurrence, or an accident risk detection, or any combination thereof. In other words, the emergency driving data may include data that is generated during an urgent and dangerous driving of the host vehicle (e.g., an accident occurrence and/or an accident risk occurrence) relative to the general driving data.

The general driving data may include, for example, ON/OFF information (or, activation/deactivation information) of the autonomous driving system for the host vehicle.

The emergency driving data may include, for example, information regarding the start and end of an emergency operation, information regarding the perception and/or likelihood of a collision, and information regarding the start and end of a risk minimization operation.

The general driving data and the emergency driving data may include information in accordance with legal requirements, for example, requiring storage of driving information for the host vehicle on a country-by-country and/or region-by-region basis.

For example, the controller 120 may acquire real-time driving data of the host vehicle using the sensor device 130.

In one example, the real-time driving data may include driving history data of the host vehicle stored in the DSSAD.

In one example, the real-time driving data may include at least one of: a driving speed of the host vehicle, a driving acceleration of the host vehicle, a driving direction of the host vehicle, a driving distance of the host vehicle, a driving history of the host vehicle, a distance from an adjacent object, a driving mode of the host vehicle, autonomous driving control ON/OFF information for the host vehicle, whether a transition demand (TD) condition is satisfied, emergency situation occurrence information, or accident risk detection information, or any combination thereof.

For example, the controller 120 may identify characteristics of the real-time driving data using the reference data.

In one example, the controller 120 may identify a location (or, country) at which the real-time driving data is acquired by referring to the reference data, based on a country code included in the real-time driving data.

In one example, the controller 120 may identify, by referring to the reference data, characteristics that include at least one of a location at which the real-time driving data is acquired, a storage expiration date of the real-time driving data, or information to be filtered, or any combination thereof.

For example, the controller 120 may filter the real-time driving data based on the identified characteristics, and store the filtered real-time driving data in a directory included in the memory 110.

In one example, the controller 120 may determine whether a directory corresponding to a characteristic regarding a location of acquisition of the real-time driving data exists in the memory 110. The memory 110 may include a plurality of directories that are separated by the location (or, country) of acquisition. The memory 110 may, for example, generate a directory corresponding to the characteristic if a directory corresponding to the characteristic does not exist, and store the real-time driving data in the generated directory.

In one example, the controller 120 may store the filtered real-time driving data after setting the file name of the filtered real-time driving data to the time of acquisition and type of the real-time driving data. Through this, the controller 120 may not need to repeatedly decrypt and/or rewrite files in the case of performing traversal for the files stored in a directory, which may reduce the workload or time required to store, delete, and manage data.

In one example, the controller 120 may identify the country information from which the real-time driving data is acquired based on the characteristics of the real-time driving data, and identify information to be filtered out based on the country information using the reference data.

In one example, the controller 120 may identify information to be filtered out corresponding to the country information of the real-time driving data, null the information to be filtered out among information included in the real-time driving data, and store the real-time driving data in a directory. The information to be filtered out may include, for example, at least one of a latitude or a longitude of the location of acquisition of data, or any combination thereof.

In one example, based on the reference data, the controller 120 may null and store the information to be filtered out acquired in a first country.

In one example, based on the reference data, the controller 120 may store the information to be filtered out acquired in a second country in the directory as it was originally acquired without nulling the information to be filtered out.

In one example, the controller 120 may encrypt the filtered real-time driving data and store it in the directory. The controller 120 may encrypt the real-time driving data, for example, by applying a hash-based message authentication code (HMAC) process to the real-time driving data.

In one example, the controller 120 may further apply anti-tampering techniques to the filtered real-time driving data before storing it in the directory.

For example, the controller 120 may identify the time of acquisition of each of pieces of driving data based on the file name of the driving data stored in the memory 110.

In one example, if the capacity of the memory 110 is larger than or equal to a specified value, the controller 120 may delete at least a portion of the driving data, which was acquired earliest using the time of acquisition. In other words, the controller 120 may delete at least a portion of the earliest stored driving data to free up a storage space if it is determined that the capacity of the memory 110 is larger than or equal to the specified value and that there is a need to delete predetermined data.

For example, the controller 120 may sequentially delete the earliest acquired driving data among the driving data determined to be deleted. In other words, the controller 120 may sequentially delete the driving data determined to be deleted on a FIFO (first in first out) basis.

In at least some driving areas, according to the laws and regulations, an autonomous driving control apparatus may need to store at least some of pieces of data generated (or identified) while performing autonomous driving control for a host vehicle in its memory.

However, as an autonomous driving technology is developed, sizes of pieces of data to be stored by the autonomous driving control apparatus and a time when the pieces of data are stored are increasing more and more. In addition, when a certain situation, such as a situation in which pieces of data should be consecutively stored or a situation in which the autonomous driving control apparatus is rest, occurs, there is a need for a method for efficiently storing and managing driving data in the autonomous driving control apparatus.

Different areas (e.g., countries, states, etc.) may require different conditions and/or regulations for management of the driving data.

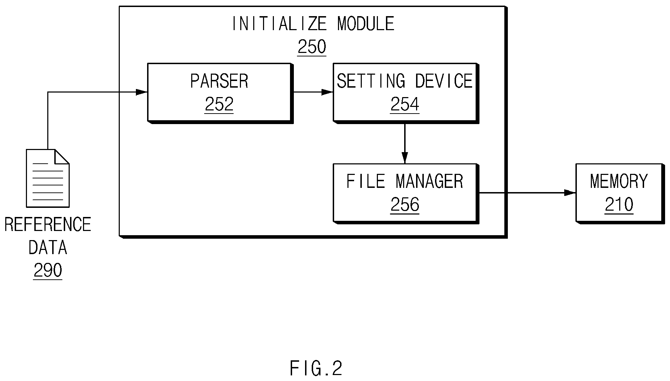

FIG. 2 shows a block diagram showing components of a vehicle control device according to an example of the present disclosure.

According to an example, a vehicle control device (e.g., the vehicle control device 100 of FIG. 1) may include a memory 210 (e.g., the memory 110 of FIG. 1) and a controller 220 (e.g., the controller 120 of FIG. 1).

For example, the controller 220 may include an initialize module 250. The initialize module 250 may include at least one of, for example, a parser 252, a setting device 254, or a file manager 256, or any combination thereof.

In FIG. 2, reference data 290 is shown as a separate configuration, but this is illustrative, and the vehicle control device may store the reference data 290 in the memory 210.

According to an example, if a trigger signal (e.g., IGN ON signal) is generated, the controller 220 may read the reference data 290.

For example, the controller 220 may parse the reference data 290 using the parser 252 included in the initialize module 250.

For example, the controller 220 may identify storage regulations, for example, based on country codes and/or information to be filtered, through the parsing operation (e.g., by using the parser 252).

For example, the controller 220 may perform a setting operation on global variable data based on results of the parsing (e.g., by the parser 252) using the setting device 254.

For example, the controller 220 may compare the country code and storage expiration date of the driving data stored in the memory 210 with the reference data by using the file manager 256.

In one example, the file manager 256 may identify at least a portion of the driving data stored in the memory 210 that is to be deleted based on the country code and/or the storage expiration date, and delete the identified at least a portion of the data (e.g., the driving data).

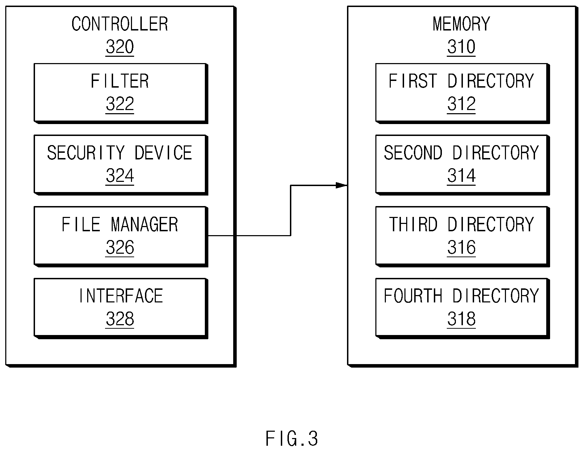

FIG. 3 shows diagram showing components of a vehicle control device according to an example of the present disclosure.

According to an example, a vehicle control device (e.g., the vehicle control device 100 of FIG. 1) may include a memory 310 (e.g., the memory 110 of FIG. 1) and a controller 320 (e.g., the controller 120 of FIG. 1).

For example, the memory 310 may include first to fourth directories (e.g., first directory 312, second directory 314, third directory 316, and fourth directory 318). In one example, each of the directories (e.g., first directory 312, second directory 314, third directory 316, and fourth directory 318) may be a storage space which may be separated by a location (or country) of acquisition of driving data.

For example, the controller 320 may include at least one of a filter 322, a security device 324, a file manager 326 (e.g., the file manager 256 of FIG. 2), an interface 328, and/or any combination thereof.

For example, the vehicle control device may acquire data (e.g., DSSAD data) regarding the driving of a host vehicle using a sensor device (e.g., the sensor device 130 of FIG. 1). The pieces of collected data may be generated based on various types of sensing data of the vehicle (e.g., one or more image sensors, one or more cameras, one or more light detection and ranging (LiDAR) devices, one or more radars, one or more sound detecting sensors, one or more smoke detectors, one or more gas detectors, etc.)

The data (e.g., DSSAD data) may comprise information related to the host vehicle's operation, such as activation and deactivation of driving systems, vehicle speed, direction, sensor readings, and/or GPS coordinates, etc. The data (e.g., DSSAD data) may be useful for multiple purposes, including ensuring compliance with regulatory requirements, providing crucial evidence in accident investigations, and/or monitoring the performance of the driving systems, etc.

Additionally or alternatively, other systems may be used to acquire and/or manage data in driving and/or automated driving. For example, event data recorders may capture crash-related data. For example, telematics systems may send (e.g., transmit) vehicle operation and performance data remotely. For example, ADAS Logging Systems may record sensor data for advanced driver-assistance features. For example, in-vehicle infotainment systems may gather user data that may inform vehicle operation.

For example, the vehicle control device may filter the acquired driving data (e.g., DSSAD data) using the filter 322. The vehicle control device may identify information to be filtered out by referring to reference data, for example, based on a country code included in the driving data. If the country code is a specified code, the vehicle control device may determine that the information to be filtered out is latitude and/or longitude.

For example, the vehicle control device may encrypt the filtered real-time driving data using the security device 324. For example, an HMAC process may be applied to the filtered real-time driving data.

For example, the vehicle control device may store the encrypted real-time driving data in the memory 310. The vehicle control device may store the real-time driving data in a directory corresponding to, for example, the country code of the real-time driving data. If the memory 310 does not have the directory corresponding to the country code of the real-time driving data, the vehicle control device may generate a new directory and store the real-time driving data in the generated directory.

For example, the vehicle control device may set a file name corresponding to the real-time driving data to time information (e.g., UTC time information) and/or a data type and/or store the real-time driving data in the directory. The time information may include, for example, information of year, month, and day. If a file corresponding to the time information at which the real-time driving data is acquired exists in the directory, the real-time driving data may be stored together in the file.

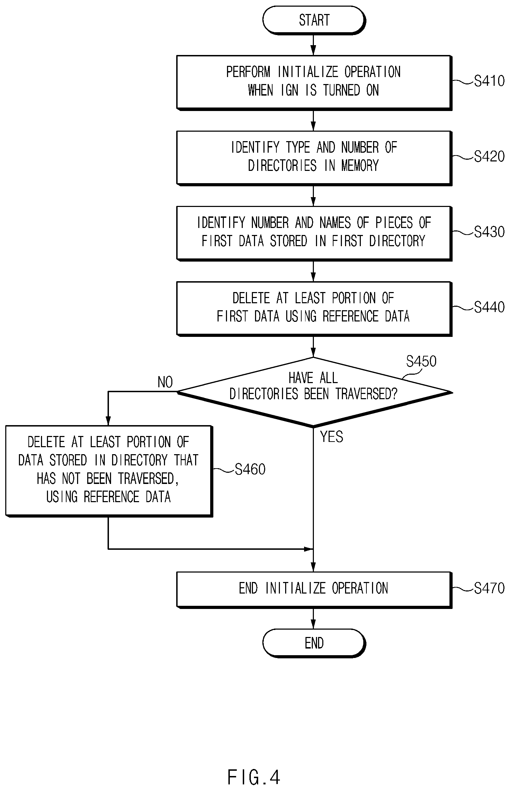

FIG. 4 shows a flowchart of a vehicle control method according to an example of the present disclosure.

According to an example, a vehicle control device (e.g., the vehicle control device 100 of FIG. 1) may perform the operations disclosed in FIG. 4. For example, at least some of the components included in the vehicle control device (e.g., the memory 110, the controller 120, and the sensor device 130 of FIG. 1) may be configured to perform the operations of FIG. 4.

In the following examples, operations of S410 to S460 may be performed sequentially, but are not necessarily performed sequentially. For example, the order of the operations may be changed, and at least two operations may be performed in parallel. Also, content that corresponds to or overlaps the description with reference to FIG. 4 may be briefly described or omitted.

According to an example, the vehicle control device may perform an initialize operation (S410) if the IGN ON signal of a host vehicle is generated.

For example, the vehicle control device may perform the initialize operation if a power supply is turned on.

According to an example, the vehicle control device may identify the types and/or number of directories in a memory (S420).

According to an example, the vehicle control device may identify the number and/or names of pieces of first data stored in the first directory (S430).

For example, the vehicle control device may identify the number and/or names of the pieces of first data (or files) stored in the first directory among the directories in the memory.

According to an example, the vehicle control device may delete at least a portion of the first data using reference data (S440) .

For example, the vehicle control device may identify at least a portion of first data whose storage expiration date has passed, for example, by considering a location (or country) and/or time of acquisition of the first data referring to reference data, and delete the at least the portion of the first data.

According to an example, the vehicle control device may determine whether all directories have been traversed (S450).

For example, if the vehicle control device has traversed all directories (e.g., S450 - Yes), the vehicle control device may perform S460.

For example, if the vehicle control device has not traversed all directories (e.g., S450 - No), the vehicle control device may repeatedly perform S455.

According to an example, the vehicle control device may delete at least a portion of data stored in a directory that has not been traversed (e.g., data whose storage expiration date has passed) using reference data (S455).

According to an example, the vehicle control device may end the initialize operation (S460).

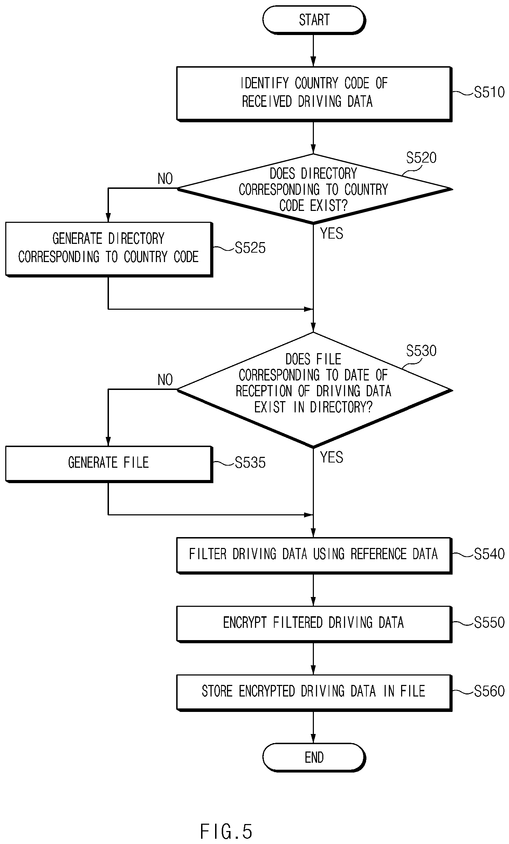

FIG. 5 shows a flowchart of a vehicle control method according to an example of the present disclosure.

According to an example, a vehicle control device (e.g., the vehicle control device of FIG. 1) may perform the operations disclosed in FIG. 5. For example, at least some of the components included in the vehicle control device (e.g., the memory 110, the controller 120, and the sensor device 130 of FIG. 1) may be configured to perform the operations of FIG. 5.

In the following examples, operations of S510 to S560 may be performed sequentially, but are not necessarily performed sequentially. For example, the order of the operations may be changed, and at least two operations may be performed in parallel. Also, content that corresponds to or overlaps the description with reference to FIG. 5 may be briefly described or omitted.

According to an example, the vehicle control device may identify the country code of the received driving data (S510).

According to an example, the vehicle control device may identify whether a directory corresponding to the country code exists (S520).

For example, if the directory corresponding to the country code exists (e.g., S520 - Yes), the vehicle control device may perform S530.

For example, if the directory corresponding to the country code does not exist (e.g., S520 - No), the vehicle control device may perform S525.

According to an example, the vehicle control device may generate a directory corresponding to the country code (S525).

According to an example, the vehicle control device may identify whether a file corresponding to the reception date of the driving data exists in the directory (S530).

For example, if the file corresponding to the reception date of the driving data exists in the directory (e.g., S530 - Yes), the vehicle control device may perform S540.

For example, if the file corresponding to the reception date of the driving data does not exist in the directory (e.g., S520 - No), the vehicle control device may perform S535.

According to an example, the vehicle control device may generate the file corresponding to the reception date of the driving data in the directory (S535).

According to an example, the vehicle control device may filter the driving data using reference data (S540).

For example, the vehicle control device may identify information to be filtered out among information included in the driving data by referring to the reference data. For example, if the country code of the driving data corresponds to a specified code, the vehicle control device may null information to be filtered out (e.g., latitude and/or longitude) among the information included in the driving data.

According to an example, the vehicle control device may encrypt the filtered driving data (S550). For example, the filtered driving data may be encrypted by using HMAC, which may ensure that the filtered driving data is secure and/or tamper-resistant. The HMAC encryption process may combine the filtered driving data with a secret key, for example, to generate a unique hash value, providing a reliable method for verifying data integrity and authenticity. This means that any attempt to alter the data without the correct key may result in a mismatched hash, indicating potential tampering. Additionally or alternatively, the filtered driving data may be encrypted by using RSA or any other suitable encryption algorithm. The encryption algorithm may provide a different level of security and functionality, allowing the data to be protected from unauthorized access and ensuring its integrity during storage and transmission.

According to an example, the vehicle control device may store encrypted driving data in a file (S560).

For example, the vehicle control device may set the file name of the encrypted driving data to the time of acquisition and/or type of the driving data and store the driving data in the directory.

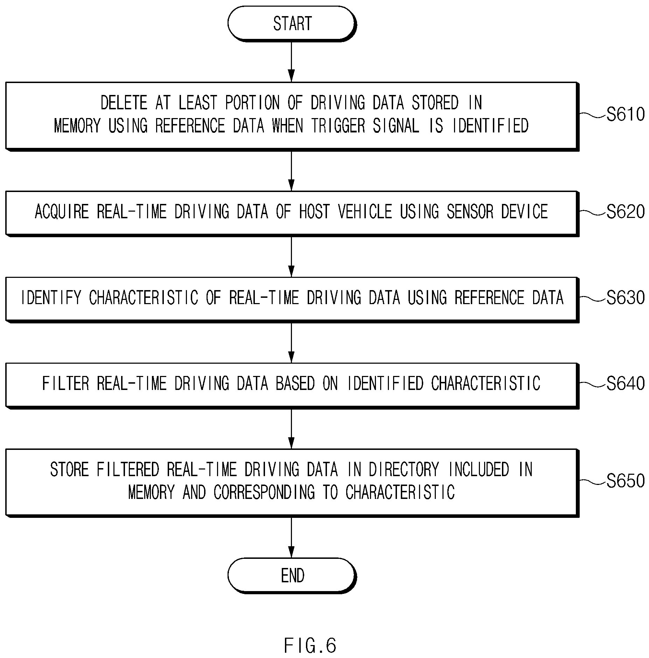

FIG. 6 shows a flowchart of a vehicle control method according to an example of the present disclosure.

According to an example, a vehicle control device (e.g., the vehicle control device of FIG. 1) may perform the operations disclosed in FIG. 6. For example, at least some of the components included in the vehicle control device (e.g., the memory 110, the controller 120, and the sensor device 130 of FIG. 1) may be configured to perform the operations of FIG. 6.

In the following examples, operations of S610 to S650 may be performed sequentially, but are not necessarily performed sequentially. For example, the order of the operations may be changed, and at least two operations may be performed in parallel. Also, content that corresponds to or overlaps the description with reference to FIG. 6 may be briefly described or omitted.

According to an example, if a trigger signal is identified, the vehicle control device may delete at least a portion of driving data stored in a memory using reference data (S610).

According to an example, the vehicle control device may acquire real-time driving data of a host vehicle using a sensor device (S620). The sensor device may comprise camera, blind spot monitoring sensor, line departure warning sensor, parking sensor, light sensor, rain sensor, traction control sensor, anti-lock braking system sensor, tire pressure monitoring sensor, seatbelt sensor, airbag sensor, fuel sensor, emission sensor, throttle position sensor, etc.

According to an example, the vehicle control device may identify characteristics of the real-time driving data using the reference data (S630). For example, the characteristics may comprise a location at which the real-time driving data is acquired, a storage expiration date of the real-time driving data, information to be filtered, and/or any combination thereof.

According to an example, the vehicle control device may filter real-time driving data based on the identified characteristics (S640).

According to an example, the vehicle control device may store the filtered real-time driving data in a directory (e.g., first directory 312, second directory 314, third directory 316, or fourth directory 318) included in a memory and corresponding to the characteristics (S650).

According to an aspect of the present disclosure, a vehicle control device includes a sensor device, a memory configured to store at least one instruction and reference data, and a controller operatively connected to the sensor device and the memory, and the at least one instruction may, when executed by the controller, cause the vehicle control device to delete at least a portion of driving data stored in the memory using the reference data when a trigger signal is identified, acquire real-time driving data of a host vehicle using the sensor device, identify a characteristic of the real-time driving data using the reference data, filter the real-time driving data based on the identified characteristic, and store the filtered real-time driving data in a directory included in the memory, the directory corresponding to the characteristic.

The at least one instruction may, when executed by the controller, cause the vehicle control device to, compare a storage expiration date according to a type and a location of acquisition of the driving data included in the reference data with a time of acquisition of the driving data, and delete at least a portion of the driving data of which the time of acquisition has passed the storage expiration date.

The type of the driving data may include general driving data including at least one of autonomous driving control ON/OFF information for the host vehicle, or whether a transition demand (TD) condition is satisfied, or any combination thereof, and emergency driving data including at least one of emergency situation occurrence information, or accident risk detection information, or any combination thereof.

The at least one instruction may, when executed by the controller, cause the vehicle control device to, determine whether the directory corresponding to the characteristic regarding a location of acquisition of the real-time driving data exists in the memory, and generate the directory when the directory does not exist, and store the real-time driving data in the generated directory.

The at least one instruction may, when executed by the controller, cause the vehicle control device to set a file name of the filtered real-time driving data to a time of acquisition and a type of the real-time driving data and store the filtered real-time driving data in the directory.

The at least one instruction may, when executed by the controller, cause the vehicle control device to identify information about a country in which the real-time driving data is acquired based on the characteristic of the real-time driving data, identify information to be filtered out according to the information about the country using the reference data, and null the information to be filtered out among information included in the real-time driving data and store the real-time driving data in the directory.

The information to be filtered out may include at least one of a latitude, or a longitude of a location of acquisition of data, or any combination thereof.

The at least one instruction may, when executed by the controller, cause the vehicle control device to encrypt the filtered real-time driving data and store the filtered real-time driving data in the directory.

The at least one instruction may, when executed by the controller, cause the vehicle control device to identify a time of acquisition of each piece of the driving data based on a file name of the driving data stored in the memory, and delete at least an earliest acquired portion of the driving data using the time of acquisition, when a capacity of the memory is greater than or equal to a specified value.

The at least one instruction may, when executed by the controller, cause the vehicle control device to determine that the trigger signal is identified when an IGN ON signal for the host vehicle is identified.

According to an aspect of the present disclosure, a vehicle control method includes deleting, by a controller, at least a portion of driving data stored in a memory using reference data when a trigger signal is identified, acquiring, by the controller, real-time driving data of a host vehicle using a sensor device, identifying, by the controller, a characteristic of the real-time driving data using the reference data, filtering, by the controller, the real-time driving data based on the identified characteristic, and storing, by the controller, the filtered real-time driving data in a directory included in the memory, the directory corresponding to the characteristic.

The vehicle control method may further include comparing, by the controller, a storage expiration date according to a type and a location of acquisition of the driving data included in the reference data with a time of acquisition of the driving data, and deleting, by the controller, at least a portion of the driving data of which the time of acquisition has passed the storage expiration date.

The type of the driving data may include general driving data including at least one of autonomous driving control ON/OFF information for the host vehicle, or whether a transition demand (TD) condition is satisfied, or any combination thereof, and emergency driving data including at least one of emergency situation occurrence information, or accident risk detection information, or any combination thereof.

The vehicle control method may further include determining, by the controller, whether the directory corresponding to the characteristic regarding a location of acquisition of the real-time driving data exists in the memory, and generating, by the controller, the directory when the directory does not exist and storing the real-time driving data in the generated directory.

The vehicle control method may further include setting a file name of the filtered real-time driving data to a time of acquisition and a type of the real-time driving data and storing the filtered real-time driving data.

The vehicle control method may further include identifying, by the controller, information about a country in which the real-time driving data is acquired based on the characteristic of the real-time driving data, identifying by the controller, information to be filtered out according to the information about the country using the reference data, and nulling, by the controller, the information to be filtered out among information included in the real-time driving data and storing the real-time driving data in the directory.

The information to be filtered out may include at least one of a latitude, or a longitude of a location of acquisition of data, or any combination thereof.

The vehicle control method may further include encrypting, by the controller, the filtered real-time driving data and storing the filtered real-time driving data in the directory.

The vehicle control method may further include identifying, by the controller, a time of acquisition of each piece of the driving data based on a file name of the driving data stored in the memory, and deleting, by the controller, at least an earliest acquired portion of the driving data using the time of acquisition, when a capacity of the memory is greater than or equal to a specified value.

The vehicle control method may further include determining that the trigger signal is identified when an IGN ON signal for the host vehicle is identified.

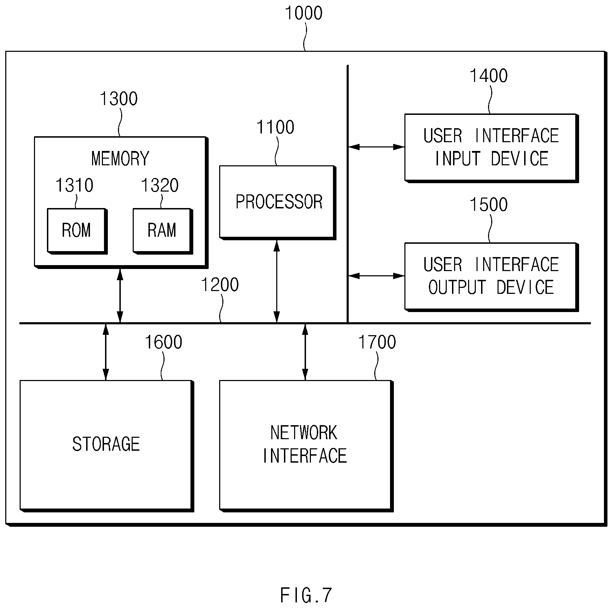

FIG. 7 shows a computing system related to a vehicle control device or a vehicle control method according to an example of the present disclosure.

Referring to FIG. 7, a computing system 1000 for a vehicle control device or a vehicle control method may include at least one processor 1100, a memory 1300, a user interface input device 1400, a user interface output device 1500, storage 1600, and a network interface 1700, which may be connected with each other via a bus 1200.

The processor 1100 may be a central processing unit (CPU) or a semiconductor device that processes instructions stored in the memory 1300 and/or the storage 1600. The memory 1300 and the storage 1600 may include various types of volatile or non-volatile storage media. For example, the memory 1300 may include a ROM (Read Only Memory) 1310 and a RAM (Random Access Memory) 1320.

The operations of the method or the algorithm described in connection with the examples disclosed herein may be embodied directly in hardware or a software module executed by the processor 1100, or in a combination thereof. The software module may reside on a storage medium (that is, the memory 1300 and/or the storage 1600) such as a RAM, a flash memory, a ROM, an EPROM, an EEPROM, a register, a hard disk, a removable disk, and a CD-ROM.

The exemplary storage medium may be coupled to the processor 1100, and the processor 1100 may read information out of the storage medium and may record information in the storage medium. Alternatively, the storage medium may be integrated with the processor 1100. The processor and the storage medium may reside in an application specific integrated circuit (ASIC). The ASIC may reside within a user terminal. In another case, the processor and the storage medium may reside in the user terminal as separate components.

The above description is merely illustrative of the technical idea of the present disclosure, and various modifications and variations may be made without departing from the essential characteristics of the present disclosure by those skilled in the art to which the present disclosure pertains.

Accordingly, the example disclosed in the present disclosure is not intended to limit the technical idea of the present disclosure but to describe the present disclosure, and the scope of the technical idea of the present disclosure is not limited by the example. The scope of protection of the present disclosure should be interpreted by the following claims, and all technical ideas within the scope equivalent thereto should be construed as being included in the scope of the present disclosure.

The effects of the vehicle control device and method according to the present disclosure are given as follows.

Examples of the present disclosure provide a vehicle control device and method which delete a portion of driving data previously stored in a memory according to a storage expiration date if a trigger signal (e.g., IGN ON signal) is identified, and adaptively filter and store newly-identified real-time driving data to meet storage regulations according to a location of driving of a host vehicle or a location of acquisition of real-time driving data

Examples of the present disclosure provide a vehicle control device and method which identify a characteristic including a location where real-time driving data is obtained and a type of the data using reference data stored in advance in a memory and store the real-time driving data in a directory corresponding to the identified characteristic.

Examples of the present disclosure provide a vehicle control device and method which set the file name of a file corresponding to real-time driving data to the time of acquisition and data type of the real-time driving data and store the real-time driving data in a directory.

Examples of the present disclosure provide a vehicle control device and method which determine whether or not to delete a file based on a file name, thereby eliminating the cumbersome process of decrypting pre-stored data and efficiently performing data management.

In addition, various effects may be provided that are directly or indirectly understood through the disclosure.

Hereinabove, although the present disclosure has been described with reference to exemplary examples and the accompanying drawings, the present disclosure is not limited thereto, but may be variously modified and altered by those skilled in the art to which the present disclosure pertains without departing from the spirit and scope of the present disclosure claimed in the following claims.

## Claims

1. An apparatus for controlling autonomous driving of a vehicle, the apparatus comprising:
a sensor device;
a memory configured to store at least one instruction and reference data; and
a controller operatively coupled to the sensor device and the memory,
wherein the at least one instruction is configured to, when executed by the controller, cause the apparatus to:
based on a first trigger signal, delete, using the reference data, at least a portion of driving data stored in the memory;
acquire, via the sensor device, real-time driving data of the vehicle;
identify, using the reference data, a characteristic of the real-time driving data;
filter, based on the identified characteristic, the real-time driving data;
store the filtered real-time driving data in a directory included in the memory, wherein the directory corresponds to the characteristic, and wherein the stored real-time driving data comprises a time indicator;
cause, based on the real-time driving data, autonomous driving of the vehicle; and
based on a second trigger signal, the time indicator, and the characteristic, delete, using the reference data, at least a portion of the real-time driving data stored in the directory.

2. The apparatus of claim 1, wherein the at least one instruction is configured to, when executed by the controller, cause the apparatus to delete the at least a portion of the real-time driving data stored in the directory by:
comparing a storage expiration date of the real-time driving data included in the reference data with a time of acquisition of the real-time driving data, wherein the storage expiration date is associated with a type of the real-time driving data and an acquisition location of the real-time driving data; and
deleting, based on the comparing, the at least a portion of the real-time driving data.

3. The apparatus of claim 1 or 2, wherein the type of the driving data comprises:
general driving data, wherein the general driving data comprises at least one of autonomous driving control ON/OFF information for the vehicle or information indicating whether a transition demand (TD) condition is satisfied; and
emergency driving data, wherein the emergency driving data comprises at least one of emergency situation occurrence information or accident risk detection information.

4. The apparatus of any one of claims 1 to 3, wherein the at least one instruction is configured to, when executed by the controller, cause the apparatus to store the filtered real-time driving data in the directory included in the memory by:
determining whether the directory corresponding to the characteristic exists in the memory, wherein the characteristic is associated with a location of acquisition of the real-time driving data;
generating, based on a determination that the directory does not exist in the memory, the directory; and
storing the real-time driving data in the generated directory.

5. The apparatus of any one of claims 1 to 4, wherein the at least one instruction is configured to, when executed by the controller, cause the apparatus to set a file name of the filtered real-time driving data to indicate a time of acquisition and a type of the real-time driving data to store the filtered real-time driving data in the directory,
wherein the time indicator corresponds to the time of acquisition.

6. The apparatus of any one of claims 1 to 5, wherein the at least one instruction is configured to, when executed by the controller, cause the apparatus to:
identify, based on the characteristic of the real-time driving data, information about a country in which the real-time driving data is acquired;
identify, using the reference data, information to be filtered out according to the information about the country; and
assign a null value for the information to be filtered out among pieces of information included in the real-time driving data for storing the real-time driving data in the directory.

7. The apparatus of any one of claims 1 to 6, wherein the information to be filtered out comprises at least one of a latitude of a location of acquisition of the real-time driving data or a longitude of the location of acquisition of the real-time driving data.

8. The apparatus of any one of claims 1 to 7, wherein the at least one instruction is configured to, when executed by the controller, cause the apparatus to encrypt the filtered real-time driving data before storing the filtered real-time driving data in the directory.

9. The apparatus of any one of claims 1 to 8, wherein the at least one instruction is configured to, when executed by the controller, cause the apparatus to:
identify, based on a file name of the real-time driving data stored in the directory, a time of acquisition of each piece of the real-time driving data; and
based on an available memory of the memory being less than or equal to a threshold, delete, using the time of acquisition, at least an earliest acquired portion of the real-time driving data.

10. The apparatus of any one of claims 1 to 9, wherein the at least one instruction is configured to, when executed by the controller, cause the apparatus to determine that the first trigger signal is identified by identifying an IGN ON signal for the vehicle.

11. A method performed by an apparatus for controlling autonomous driving of a vehicle, the method comprising:
based on a first trigger signal, deleting, by a controller using reference data stored in a memory of the vehicle, at least a portion of driving data stored in the memory;
acquiring, by the controller and via a sensor device of the vehicle, real-time driving data of the vehicle;
identifying, by the controller using the reference data, a characteristic of the real-time driving data;
based on the identified characteristic, filtering, by the controller, the real-time driving data;
storing, by the controller, the filtered real-time driving data in a directory included in the memory, wherein the directory corresponds to the characteristic, and wherein the stored real-time driving data comprises a time indicator;
causing, based on the real-time driving data, autonomous driving of the vehicle; and
based on a second trigger signal, the time indicator, and the characteristic, deleting, using the reference data, at least a portion of the real-time driving data stored in the directory.

12. The method of claim 11, wherein the deleting the at least a portion of the real-time driving data stored in the directory comprises:
comparing, by the controller, a storage expiration date of the real-time driving data included in the reference data with a time of acquisition of the real-time driving data, wherein the storage expiration date is associated with a type of the real-time driving data and an acquisition location of the real-time driving data; and
based on the comparing, deleting, by the controller, the at least a portion of the real-time driving data, and
wherein the type of the driving data comprises:
general driving data, wherein the general driving data comprises at least one of autonomous driving control ON/OFF information for the vehicle or information indicating whether a transition demand (TD) condition is satisfied; and
emergency driving data, wherein the emergency driving data comprises at least one of emergency situation occurrence information or accident risk detection information.

13. The method of claim 11 or 12, wherein the storing the filtered real-time driving data in the directory included in the memory comprises:
determining, by the controller, whether the directory corresponding to the characteristic exists in the memory, wherein the characteristic is associated with a location of acquisition of the real-time driving data;
based on a determination that the directory does not exist in the memory, generating, by the controller, the directory; and
storing the real-time driving data in the generated directory; and
setting a file name of the filtered real-time driving data to indicate a time of acquisition and a type of the real-time driving data to store the filtered real-time driving data, and
wherein the time indicator corresponds to the time of acquisition.

14. The method of any one of claims 11 to 13, further comprising:
based on the characteristic of the real-time driving data, identifying, by the controller, information about a country in which the real-time driving data is acquired;
identifying, by the controller using the reference data, information to be filtered out according to the information about the country; and
assigning, by the controller, a null value for the information to be filtered out among pieces of information included in the real-time driving data for storing the real-time driving data in the directory, and
wherein the information to be filtered out comprises at least one of a latitude of a location of acquisition of the real-time driving data or a longitude of the location of acquisition of the real-time driving data.

15. The method of any one of claims 11 to 14, further comprising:
encrypting, by the controller, the filtered real-time driving data before storing the filtered real-time driving data in the directory;
based on a file name of the real-time driving data stored in the directory, identifying, by the controller, a time of acquisition of each piece of the real-time driving data;
based on an available memory of the memory being less than or equal to a threshold, deleting, by the controller using the time of acquisition, at least an earliest acquired portion of the real-time driving data; and
determining that the first trigger signal is identified by identifying an IGN ON signal for the vehicle.
